# EUROPEAN PATENT SPECIFICATION

(11) **EP 4 158 911 B1**
(45) Date of publication and mention of the grant of the patent: **08.10.2025**
(21) Application number: 21735840.7
(22) Date of filing: 28.05.2021
(51) Int. Cl.: H04S 7/00, G01H 7/00, G10K 15/12

(54) **METHOD AND SYSTEM FOR POSITION-DEPENDENT EXTRAPOLATION OF MULTICHANNEL ROOM IMPULSE RESPONSES**
VERFAHREN UND SYSTEM ZUR POSITIONSABHÄNGIGEN EXTRAPOLATION VON MEHRKANALIGEN RAUMIMPULSANTWORTEN
PROCÉDÉ ET SYSTÈME D'EXTRAPOLATION EN FONCTION DE LA POSITION DE RÉPONSES IMPULSIONNELLES MULTICANAUX D'UNE SALLE

(30) Priority: 29.05.2020 AT 601692020
(43) Date of publication of application: 05.04.2023
(73) Proprietor: Atmoky GmbH, 8010 Graz (AT)
(72) Inventor: ZOTTER, Franz, 8020 Graz (AT); MÜLLER, Kaspar, 87435 Kempten (DE); ZAUNSCHIRM, Markus, 8010 Graz (AT); SCHÖRKHUBER, Christian, 8010 Graz (AT)
(74) Representative: Mathys & Squire
(86) International application number: PCT/AT2021/060186
(87) International publication number: WO 2021/237265

(56) References cited:
- EP-A1- 2 028 884
- FAZENDA BRUNO ET AL: "3-DIMENSIONAL ROOM IMPULSE RESPONSE MEASUREMENTS IN CRITICAL LISTENING SPACES", PROCEEDINGS OF THE INSTITUTE OF ACOUSTICS, VOL. 30. PT 6. 2008, 2008, pages 232 - 239, XP055842555, Retrieved from the Internet <URL:http://eprints.hud.ac.uk/id/eprint/3580/1/IOA_Proceedings_Vol30-6_RS24-2008.pdf> [retrieved on 20210920]
- PLINGE AXEL ET AL: "Six-Degrees-of-Freedom Binaural Audio Reproduction of First-Order Ambisonics with Distance Information", CONFERENCE: 2018 AES INTERNATIONAL CONFERENCE ON AUDIO FOR VIRTUAL AND AUGMENTED REALITY; AUGUST 2018, AES, 60 EAST 42ND STREET, ROOM 2520 NEW YORK 10165-2520, USA, 11 August 2018 (2018-08-11), XP040699028
- GIOVANNI DEL GALDO ET AL: "Generating virtual microphone signals using geometrical information gathered by distributed arrays", HANDS-FREE SPEECH COMMUNICATION AND MICROPHONE ARRAYS (HSCMA), 2011 JOINT WORKSHOP ON, IEEE, 30 May 2011 (2011-05-30), pages 185 - 190, XP031957294, ISBN: 978-1-4577-0997-5, DOI: 10.1109/HSCMA.2011.5942394
- GARCIA-GOMEZ VICTOR ET AL: "Binaural Room Impulse Responses Interpolation for Multimedia Real-Time Applications", AES CONVENTION 144; MAY 2018, AES, 60 EAST 42ND STREET, ROOM 2520 NEW YORK 10165-2520, USA, 14 May 2018 (2018-05-14), XP040698825

## Description

The present invention relates to methods and systems for position-dependent extrapolation or interpolation and extrapolation of multichannel room impulse responses resulting from a sound event emitted in a room.

### Cross reference

The present disclosure of the invention takes priority of the Austrian Provisional Patent Application (A 60169/2020) including the post published scientific article of
K. Müller and F. Zotter, "Auralization based on multi-perspective ambisonic room impulse responses", Acta Acustica 2020, 4, 25.

### Technical field of the invention

Room impulse responses capture information about sound propagation from a sound source to a receiver located at a specific measurement position inside an acoustic space, whereas the receiver is usually an omnidirectional microphone. By convolving an audio signal with the room impulse responses, the audio signal that would have been recorded at the measurement position in a sound field, i.e. under emission of sound waves propagating from the sound source can be simulated or auralized, respectively.

### Background of the invention

Audio signal processing for providing improved ways of spatial acoustic performance in various entertainment or communication applications experiences a strong growth of interest. Applications like a virtual concert hall or even video conference tools strive for a more realistic user experience demanding for a space enriched sound in correlation to a simulated virtual reality or a captured and reproduced real environment.

To capture directional information of the sound propagation between the sound source and the measurement position, two or more directional or omnidirectional microphones forming a microphone array (MA) are used to capture multichannel room impulse responses (MCRIRs), whereas the microphones are either spaced or coincident. By convolving multichannel room impulse responses with an audio signal, and by applying appropriate rendering depending on the microphone array properties, the spatial qualities of the sound field at the measurement position can also be simulated and auralized, respectively. Apart from that, it is not possible to capture the desired directional information about the sound field at the measurement position by single channel room impulse responses (SCRIRs) which thus prohibits the simulation and auralization of spatial qualities of the resulting audio signal at the measurement position.

Since multichannel room impulse responses are specific to the respective measurement positions, a multichannel room impulse response needs to be measured for every position in space, if a thorough reproduction of the sound field is desired. Hence, if a simulation of the sound field shall be derivable for any arbitrary position in space, a very high measurement or capturing effort and amount of data is required. This is, however, exactly the demand for auralization purposes like augmented- and virtual reality (VR) applications, where a user physically moves and continuously changes the position in a virtual or real environment thus requiring a constantly changing reference on a pool of spatially corresponding measurement positions according to the physical movement of the user.

To this end, there is a need for a method and technical equipment for generating multichannel room impulse responses at arbitrary locations from a considerably limited set of measurements.

In a known technique this could be achieved by a position-dependent weighting of the measured multichannel room impulse responses (see Masterson 2009). However, results indicated that this operation introduces significant temporal, timbral, and spatial artifacts which can only be mitigated by reducing the spacing between the measurement positions, thus considerably increasing measurement or simulation effort, respectively.

Furthermore, another known technique is based on transforming recorded microphone signals in a sound scene to their respective spherical harmonics coefficients and to apply a spatial translation operation to the expansion coefficients. However, this operation is only valid in the close vicinity of a measurement position. Quality again relies on a dense grid of recording positions, and known methods do not make use of the temporal structure specific to measured or simulated multichannel room impulse responses.

Further, EP 2 028 884 A1 discloses a method and apparatus for modeling a room impulse response, which includes: receiving a sound pressure signal that is obtained by a microphone when an impulse-typed sound source is excited and detecting a room impulse response; determining boundaries between a plurality of intervals of the room impulse response such that the room impulse response is divided into the plurality of intervals on a time domain; and modeling the room impulse response using a different modeling method for each of the plurality of divided intervals.

More comprehensive explanations of exemplary prior art are to be found in non-patent literature, as e.g. the scientific articles:
T. Pihlajamäki and V. Pulkki, "Synthesis of complex sound scenes with transformation of recorded spatial sound in virtual reality," J. Audio Eng. Soc, vol. 63, no. 7 /8, pp. 542-551, 2015; and
Tylka, J. G., & Choueiri, E. Y. (2020). Fundamentals of a parametric method for virtual navigation within an array of ambisonics microphones. Journal of the Audio Engineering Society, 68(3), 120-137.
A. Plinge, S.J. Schlecht, O. Thiergart, T. Robotham, O. Rummukainen, E. Habets: Sixdegrees-of-freedom binaural audio reproduction of first-order ambisonics with distance information, in Audio Engineering Society Conference: 2018 AES International Conference on Audio for Virtual and Augmented Reality. 2018.
M. Kentgens, A. Behler, P. Jax: Translation of a higher order ambisonics sound scene based on parametric decomposition, in IEEE International Conference on Acoustics, Speech and Signal Processing (ICASSP). 2020, pp. 151-155.
O. Thiergart, G.D. Galdo, M. Taseska, E. Habets: Geometry-based spatial sound acquisition using distributed microphone arrays. IEEE Transactions on Audio, Speech, and Language Processing 21, 12 (2013) 2583-2594.
C. Masterson, G. Kearney, F. Boland: Acoustic impulse response interpolation for multichannel systems using dynamic time warping, in Audio Engineering Society Conference: 35th International Conference: Audio for Games. 2009.

### Summary of the Invention

It is an object of the present invention to solve the deficiencies of the prior art and to allow generation of multichannel room impulse responses at arbitrary spatial locations from a low-density grid of measurement/simulation positions or even a single measurement/simulation position with high accuracy.

The above object is solved by a method for position-dependent extrapolation of multichannel room impulse responses based on the method steps of claim 1 and an apparatus for position-dependent extrapolation of multichannel room impulse responses based on the features of claim 12. Further features and details of the invention result from the dependent claims, the specification, and the drawings. Features and details described in connection with the method according to the invention naturally also apply in connection with the apparatus according to the invention and the system including the apparatus, and vice versa, so that the individual aspects of the invention are or can always be mutually referred to in the disclosure.

The invention is set out in the appended set of claims.

According to the invention a method is provided for position-dependent extrapolation of multichannel room impulse responses, comprising the steps of: providing at least one input multichannel room impulse response resulting from a sound emitted by a sound source in a room; wherein the multichannel room impulse response comprises salient peaks, which correspond to sound events and which respectively represent a direct or a reflective propagation throughout the room;
splitting multichannel signals of the at least one input multichannel room impulse response into temporal segments, in which the salient peaks are enclosed;
identifying the salient peaks in the at least one multichannel room impulse response; determining spatial positions corresponding to the sound events based on known spatial parameters, and/or
by means of a localization method for deriving spatial information contained in the at least one multichannel room impulse response; assigning the determined sound event positions to the corresponding temporal segments of the at least one input multichannel room impulse response; and generating an extrapolated multichannel room impulse response for a desired extrapolation position representing an arbitrary spatial location in the room, comprising the steps of: applying a gain, applying a directional mapping, and applying a temporal shift, to each of the temporal segments of the at least one input multichannel room impulse response, respectively, for obtaining the extrapolated multichannel room impulse response for the desired extrapolation position.

In particular, the invention decomposes the multichannel room impulse response into a multitude of temporal segments characterized by a position in space, and each segment and position pair are referred to as sound event. Sound events are the core elements enabling position-dependent extrapolation and interpolation.

In the context of the present invention room refers to any acoustic environment exhibiting or containing one or more reflective surfaces or acoustically scattering, diffracting, or absorbing material.

The present invention allows, for the first time, to solve the problem of providing an improved technique for generating virtual multichannel room impulse responses corresponding to a virtual static or moving position through arbitrary spatial locations in a room given a considerably limited set of captured multichannel room impulse responses or even one single multichannel room impulse response.

As a result, the method according to the invention boasts the following essential advantages beyond the prior art techniques:
The invention enables to make any mono signal audible in a spatial acoustic environment at an adjustable listening position.

In addition to the adjustable listening position the rendering can also incorporate rotation resulting in a capability of six degrees of freedom (6DoF).

Due to the low storage effort for the measured or simulated multichannel room impulse response(s), the invention can be implemented in virtual reality or communication applications which are often constrained to minimally equipped audio recording means of handheld devices, notebooks, or the like.

The resulting spatial audio signals are presentable on loudspeaker arrangements or on headphones, which further imposes high usability for many applications.

Advantageous embodiments and details of implementation of the present invention are subject of the dependent claims.

According to an aspect of the invention, not only at least one, but a plurality of input multichannel room impulse responses resulting from the sound emitted by the sound source is provided, wherein each of which corresponds to a different one of a plurality of predetermined spatially distributed measurement positions; and the step of determining the position corresponding to any of the sound events is based on the known spatial parameters, and/or by means of the localization method for deriving spatial information contained in one or more of the plurality of input multichannel room impulse responses. Hence, the method is preferably based on a plurality of input multichannel room impulse responses to gain spatial information corresponding to different measurement positions.

According to an aspect of the invention, the step of providing at least one input multichannel room impulse response further comprises: providing at least one microphone array for capturing a set of impulse responses due the sound source in the room; arranging the at least one microphone array in a spatially predetermined measurement position in the room; and capturing at least one multichannel room impulse response due to the sound source in a room. Thus, the method is extended to a preceding stage prior to the provision and processing of signals by including the capturing of the sound event. This particular measure can be implemented by a minimal audio recording setup of only one microphone array.

According to an aspect of the invention, the step of providing a plurality of multichannel room impulse responses further comprises: providing a plurality of microphone arrays for capturing a distributed set of impulse responses due to the sound source in the room; arranging the plurality of microphone arrays in a plurality of predetermined spatially distributed measurement positions in the room; and capturing a plurality of multichannel room impulse responses resulting from resulting from the sound event emitted by the sound source, respectively. In this way, again, the enriched signal basis captured in different positions improves the quality of available spatial information underlying the step of extrapolation, and hence improves the quality of the resulting virtual multichannel room impulse responses.

According to an aspect of the invention, there is not only provided a method for position-dependent extrapolation, but for an extrapolation and interpolation of multichannel room impulse responses, including the afore mentioned steps, and in addition, comprising the further steps of: interpolating an interpolated multichannel room impulse response for the desired extrapolation position representing an arbitrary spatial location in the room, wherein the interpolation comprises the steps of: choosing a subset of at least two of the extrapolated multichannel room impulse responses based on the relative positions of the respective measurement positions with respect to the extrapolation position; applying a gain to weight each of the extrapolated multichannel room impulse responses of the chosen subset; and summing the gain weighted extrapolated multichannel room impulse responses for obtaining the interpolated multichannel room impulse response for the extrapolation position. This method enables by means of positional interpolation, more freedom in the choice or provision of an arbitrary spatial location for the extrapolated position.

According to an aspect of the invention, in the step of splitting signals, the temporal segments overlap and have unequal size. This enables to tailor the temporal segments focused on peaks in the amplitude of a channel signal having characteristic information.

According to an aspect of the invention, in the step of splitting signals, each temporal segment contains not more than one salient peak. Each salient peak represents a direct or reflective propagation throughout the room and being characteristic for the spatial dimensions of the room. Hence the splitting into discrete segments of single peaks improves comparability of corresponding peaks between channels.

According to an aspect of the invention, in the step of splitting signals, the duration of each temporal segment depends on a duration of the one salient peak. This measure improves the manageability of signal processing.

According to an aspect of the invention, in the step of splitting signals, a duration of each temporal segment contains a temporal margin prior and after the one salient peak, or at least a temporal margin prior to a next salient peak of a next temporal segment. Also, this measure improves manageability of the handling of signal processing.

According to an aspect of the invention, in the step of splitting signals, the duration of each temporal segment is in the range of one or more milliseconds, or a fraction of a millisecond. Such durations showed a good compromise for focused windows enclosing the peaks in the temporal segments.

According to an aspect of the invention, in the step of splitting signals, the temporal segment containing the one salient peak can also be decomposed into a temporal segment that only contains the directional signal component of the salient peak and a residual temporal segment, whereas the residual temporal signal may be assigned to the late multichannel room impulse response. This decomposition may be performed in the spatial and/or in the time-frequency domain. This measure improves the manageability of signal processing.

According to an aspect of the invention, in the step of splitting signals, temporal regions of the input multichannel room impulse response that are diffuse or do not contain any salient peak are assigned to the late multichannel room impulse response.

According to an aspect of the invention, in the step of determining a sound event position, the localization method utilizes one of an estimated direction-of-arrival (DOA), the relative time-of-arrival (rTOA) and/or the direct-sound absolute time offset (ATO) that relates to the first salient peak corresponding to the direct sound event arriving without reflections within the room and the spatial arrangement of the at least one sound source. Such parameters are best suited for deriving spatial information.

According to an aspect of the invention, in the step of determining a sound event position, the sound event position can occupy an auxiliary spatial position lying within or beyond a spatial volume of the room. Due to this auxiliary source modelling the underlying calculations and signal processing with respect to the localization of the sound source can be simplified.

According to an aspect of the invention, in the step of extrapolating, the gain applied to each temporal segment accounts for a relation of the distance between the measurement position and the sound event position and the distance between the extrapolation position and the sound event position. This measure is effective yet simple to calculate for setting a sound quality for imaging the distance.

According to an aspect of the invention, in the step of extrapolating, the gain might be limited to avoid deteriorating high gain levels for an extrapolation position approaching close to the sound event position. This measure suppresses unintended overriding or highest levels of volume.

According to an aspect of the invention, in the step of extrapolating, the directional mapping applied to each temporal segment accounts for a rotated perspective of the sound event at the extrapolation position. This measure imposes a capability of six degrees of freedom.

According to an aspect of the invention, in the step of extrapolating, the temporal shift applied to each temporal segment accounts for the difference of the distance between the measurement position and the sound event position and the distance between the extrapolation position and the sound event position. This measure is effective for setting a sound quality for imaging a spatial orientation with respect to the user.

According to an aspect of the invention, in the step of extrapolating, the temporal shifts are adjusted such as to maximize the cross-correlations between corresponding temporal segments. By an additional mutual adjustment of multichannel room impulse responses, spectral artifacts can be minimized, and the quality of the audio result is improved.

According to an aspect of the invention, in the step of interpolating, the subset of extrapolated multichannel room impulse responses is chosen so as to define a simplex of respective measurement positions enclosing the extrapolation position. This measure is effective for selecting a best suited set of captured information without overdetermination of parameters.

According to an aspect of the invention, in the step of interpolating, the subset of extrapolated multichannel room impulse responses is defined by a number of respective measurement positions being closest to the extrapolation position. By this measure, captured information of highest precision and suitability is selected.

According to an aspect of the invention, the method further comprises the step of providing a dedicated sound source in a predetermined spatial position for emitting the sound event in the room prior to the step of capturing a multichannel room impulse response. Thus, the method is extended to a first stage prior to the capturing and processing of signals by including the emission of a suitable signal for ensuring processability and maximizing information content of audio signals in purpose of the following steps.

According to an aspect of the invention, the dedicated sound source emits as the sound event a frequency sweep or a minimum length sequence (MLS). Such sound signal is best suited due to a good compromise of required time and maximized frequency spectrum supporting high signal to noise ratio for the subsequent for a deep spatiotemporal analysis.

According to the invention also an apparatus is provided for position-dependent extrapolation or extrapolation and interpolation of multichannel room impulse responses, comprising: storage means for storing at least one provided input multichannel room impulse response resulting from a sound event emitted by a sound source in a room, and signal processing means configured to conduct each of the steps of the above mentioned methods for position-dependent extrapolation or extrapolation and interpolation of multichannel room impulse responses. This apparatus enables the implementation of the method.

According to an aspect of the invention a system for position-dependent extrapolation or extrapolation and interpolation of multichannel room impulse responses including the afore mentioned apparatus, and comprises in addition at least one microphone array or, alternatively a plurality of the above mentioned microphone arrays arranged in spatially predetermined measurement positions, preferably equidistantly distributed within the room. This system further enables the capturing of audio signals by one microphone array capturing the sound events sequentially at different measurement positions, or a plurality of microphone arrays simultaneously capturing the same sound events at different measurement positions.

According to an aspect of the invention each microphone array comprises three sound capturing devices for a resulting planar capturing setup. This configuration represents the minimal and hence most economic microphone equipment for recording the mentioned setup.

According to an aspect of the invention each microphone array comprises four sound capturing devices for a resulting three-dimensional capturing setup. This configuration represents the minimal and hence most economic microphone equipment for recording the mentioned setup.

According to an aspect of the invention each microphone array is configured to support a signal transformation into corresponding spherical harmonic coefficients. This configuration represents a preferred simplification of signal processing.

According to an aspect of the invention the system further comprises a dedicated sound source in a predetermined spatial position for emitting the sound event in the room. This extended system also enables to optimize a best suited sound event to be captured and processed as mentioned above.

Thus, the apparatus and system according to the invention contribute the same advantages as have been explained with reference to the method according to the invention.

### Detailed description of the invention

Further advantages, features and details of the invention will be apparent from the following specification in which embodiments of the invention are described in detail with reference to the drawings. The features mentioned in the claims and in the specification may be essential to the invention individually or in any combination. In the drawings:
Fig. 1 shows a constellation for capturing a multichannel room impulse response by one microphone array once in one measurement position or sequentially in different measurement positions, and a desired extrapolation position in an arbitrary location of a room according to the invention;
Fig. 2 shows a constellation for the capturing a plurality of multichannel room impulse responses by a plurality of microphone arrays in different measurement positions, and the desired extrapolation position in an arbitrary location of a room according to the invention;
Fig. 3 depicts the steps of an extrapolation of temporal segments of a multichannel room impulse response according to the invention;
Fig. 4 indicates references between matching salient peaks of a set of multichannel room impulse responses;
Fig. 5 indicates a time alignment of multichannel room impulse responses in purpose of maximizing cross-correlations of corresponding salient peaks;
Fig. 6 shows a block diagram of functional units representing steps of an extrapolation and interpolation according to the invention;
Fig. 7 shows a block diagram of functional units representing an extrapolation of a single multichannel room impulse response according to the invention;
Fig. 8 shows a block diagram of functional units representing an interpolation of a single extrapolated multichannel room impulse response according to the invention;
Fig. 9 shows a block diagram of functional units representing an extrapolation of a set of three multichannel room impulse responses according to the invention; and
Fig. 10 shows a block diagram of functional units representing an interpolation of three extrapolated multichannel room impulse responses according to the invention.

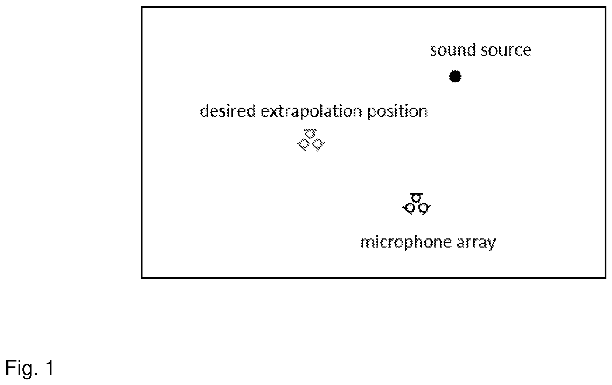

Fig. 1 shows a constellation of a sound source, one microphone array and a desired extrapolation position representing a static or movable arbitrary location of an audio user within a real or virtual room.

A generally known microphone array in terms of this disclosure is defined as a plurality of sound capturing devices aligned at predetermined spatial locations exhibiting known directivity patterns, thus enabling spatial analysis of a sound field.

In this setup of merely one microphone array, the capturing or input of an already captured at least one multichannel impulse response (MCRIR) resulting from a sound field emitted by the sound source is provided as an audio signal basis corresponding to the one microphone array. The microphone array is placed at a preferably known spatial position. The microphone array consists of at least 3 real or virtual microphones.

However, instead of capturing a multichannel impulse response by means of a microphone array, the same can alternatively also be provided by a simulated multichannel impulse response derivable from a simulation model for a virtual room or any synthetic acoustic environment.

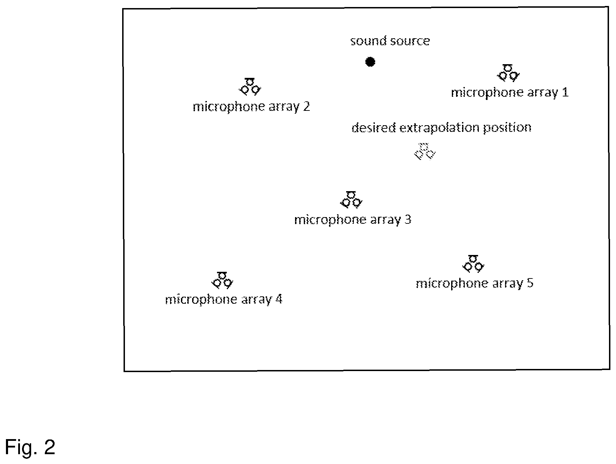

Fig. 2 shows a constellation of the sound source, the desired extrapolation position, and a plurality of microphone arrays distributed in predetermined measurement positions. The microphone arrays may be located on the same or on different heights.

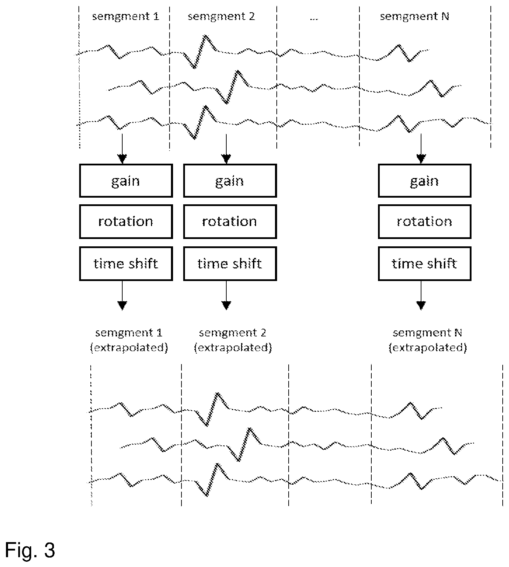

Referring to Fig. 3, a position-dependent multichannel impulse response captured by a real or virtual microphone array located at a predetermined measurement position shall be extrapolated to an arbitrary desired extrapolation position. That is, the described method transforms the input multichannel impulse response to an extrapolated multichannel impulse response that approximates a virtual multichannel impulse response that would have been captured by a microphone array located at the desired extrapolation position.

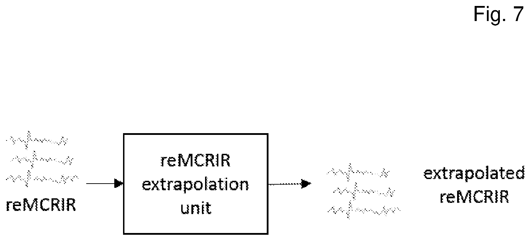

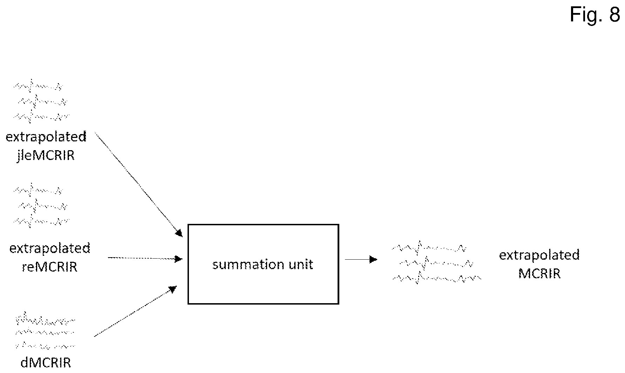

In the following, a first embodiment of the invention is disclosed to generate an extrapolated multichannel room impulse response from one multichannel impulse response involving an extrapolation but no interpolation, in correspondence with Figs. 3, 7 and 8.

In a first step, the multichannel signals of the multichannel impulse response are split into a number of temporal segments, whereas the segments may overlap, may be windowed, and may have unequal sizes. In a preferred implementation, the segmentation is chosen such that each segment contains not more than one salient peak characterized by a duration and of the salient peak. Alternatively, a characteristic shape of the salient peak is recognized for defining a window of the temporal segment. The segment might have a duration depending on the character of the salient peak of e.g. one or more milliseconds, or also less than one millisecond corresponding to a sample length.

For such temporal segment a left segment boundary is set to e.g. 0.3 ms prior to the salient peak, as well as the right segment boundary is set to 0.3 ms prior to the next salient peak. A preferred maximal segment length is set to be 3 ms. Alternatively, it is also feasible that one or more segments have a length equal to 1 sample.

In a next step, salient peaks in the multichannel impulse response are identified. For example, if a multichannel impulse response is provided as - or can be transformed into - an ambisonic format with an expansion order of at least one, the length of the acoustic intensity vector, or a temporally smoothed version thereof, might be compared to a predefined or adaptive threshold to identify salient peaks in the multichannel impulse responses.

In a next step, a sound event position is assigned to each temporal segment of the multichannel room impulse response. The first salient peak corresponds to the first arriving sound impulse directly propagating from the sound source to the microphone array without reflections in the room.

The position of the sound source and sound events, respectively, can be estimated by means of one of generally known localization methods, for obtaining parameters like an estimated sound location, an estimated direction-of-arrival (DOA), the relative time-of-arrival (rTOA),the absolute time offset (ATO) that can be estimated for the rTOA of a first salient peak.

Generally known methods to estimate the direction-of-arrival (DOA) in terms of present disclosure include Steered Response Power-based methods, Cross-Correlation-based methods, variations of the MUSIC (Multiple Signal Classification) algorithm, variations of the ESPRIT (Estimation of Signal Parameters via Rotational Invariance Techniques) algorithm, Acoustic Intensity Vector-based methods or learning-based methods e.g. using Deep Neural Networks.

Generally known methods to estimate the location of a sound event or a sound source in terms of present disclosure includes DOA-based methods, methods based on the Time Difference of Arrivals (TDOAs), combinations of DOA and TDOA-based methods, energy based methods, or learning-based methods e.g. using Deep Neural Networks.

A further optional step applies only in the present embodiment, where only one multichannel impulse response of only one microphone array is provided, as shown in the setup of Fig. 1, and if an absolute time offset in the multichannel impulse responses is not known (e.g. due an unknown system latency). In this case, the time offset may be determined using the form of a relative time-of-arrival (rTOA) of the direct propagation path peaks and the known position of the sound source. Using this time offset, all relative time-of-arrivals are transformed into the form of absolute time-of-arrivals (TOAs) by subtracting the respective time offsets. This implies that later parts of multichannel impulse responses are cut accordingly.

In a next step, a set of parameters is determined for each salient peak of the multichannel impulse responses. These parameters may include its level, a relative time-of-arrival (rTOA), and a direction-of-arrival (DOA). These parameters can be computed in various ways by generally known localization methods, e.g. using the Steered Response Power, Multiple Signal Classification, or the Acoustic Intensity Vector.

In a next step, estimated salient peak parameters of the multichannel impulse response may be used to jointly localize the location of sound events, e.g. the virtual position of image sources corresponding to acoustic reflections, diffraction, scattering, or diffuse reflections. This step may be performed only for a reduced number of multichannel impulse responses in vicinity of a desired extrapolation position. For example, in a planar setup including only a triplet of measurement positions for considerable limitation of combinatorial complexity of the following steps.

In a next step, the extrapolated multichannel room impulse response is generated from the input multichannel room impulse response by applying a gain, a directional mapping operation, preferably a rotation having e.g. a linear rotation operator, and a temporal shift to each segment.

The gain is computed by using the relation of the distance between the sound event position and the measurement position and the distance between the sound event position and the extrapolation position. If the extrapolation position is close to the instantaneous source position, the gain is preferably limited to avoid unreasonably high levels.

For a rotation in terms of the directional mapping, a computation of the directional mapping operator depends on properties of the at least one microphone array, preferably allowing for an output signal transformation into its corresponding spherical harmonic coefficients.

The rotation of the multichannel signals provides a rotated perspective of the sound source at the desired extrapolation position. The rotation is performed by applying a rotation operator for directional mapping. The computation of the rotation operator depends on the properties of the microphone arrays that are used to measure and capture the multichannel room impulse responses. In order to allow for this operation, the minimal number of microphones per array is 3 for a planar setup, and 4 for a three-dimensional setup. In a preferred embodiment, the microphone array is configured such in terms of microphone type and alignment that its signals can be transformed into its corresponding spherical harmonic coefficients which simplifies processing, since the rotation operator can be computed in closed form and is readily available.

The temporal shift provides a spatial acoustic characteristic for the room and is applied according to the changed distance to the sound event position between the respective measurement position and the desired extrapolation position. In other words, the temporal shift is computed by the difference of the distance between the measurement position and the sound event position and the distance between the extrapolation position and the instantaneous source position.

Optionally, in purpose of further increasing the sonic quality, the temporal shifts of all chosen jointly localizable early multichannel room impulse responses (jleMCRIRs) described later in the following specification, may be considered and adjusted such as to maximize their cross-correlations which results in minimal spectral artifacts, when the extrapolated multichannel room impulse responses are interpolated in a subsequent stage.

In the following, a second embodiment of the invention is disclosed to generate an interpolated multichannel room impulse response from at least two extrapolated multichannel room impulse responses corresponding to at least two microphone arrays as shown in the setup of Fig. 2.

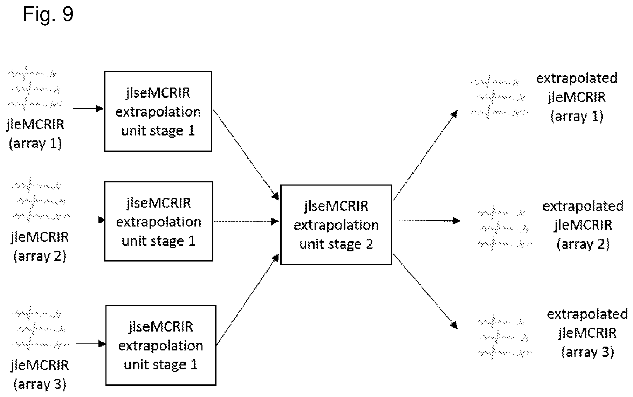

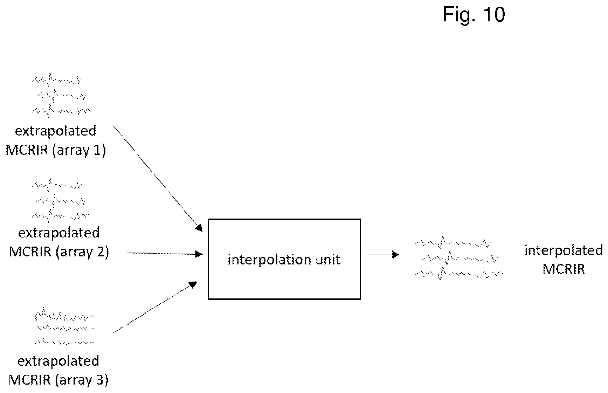

In the following, an embodiment of the invention is disclosed to generate an extrapolated and interpolated multichannel room impulse response from at least two extrapolated multichannel room impulse responses corresponding to Figs. 3, 9 and 10.

In a first step of interpolation, a subset of the available extrapolated multichannel room impulse responses is chosen based on the desired extrapolation position and the corresponding measurement positions. For example, in a planar setup, a triangulation step is performed for the measurement positions such that the multichannel room impulse response subset is defined by a triplet that encloses the extrapolation position. In another embodiment, alternatively, a number of closest measurement positions to the extrapolation position is chosen.

In a second step of interpolation, a gain factor is applied to each of the chosen extrapolated multichannel room impulse responses in the previous step. The gain factors may be proportional to the respective distances between the measurement positions and the extrapolation positions. Furthermore, the gain factors may be chosen, e.g. such that they sum to 1 or such that their squares sum to 1.

In a third step of interpolation, the gain weighted extrapolated multichannel room impulse responses are summed up such that an interpolated multichannel room impulse response is obtained corresponding to the desired extrapolation position.

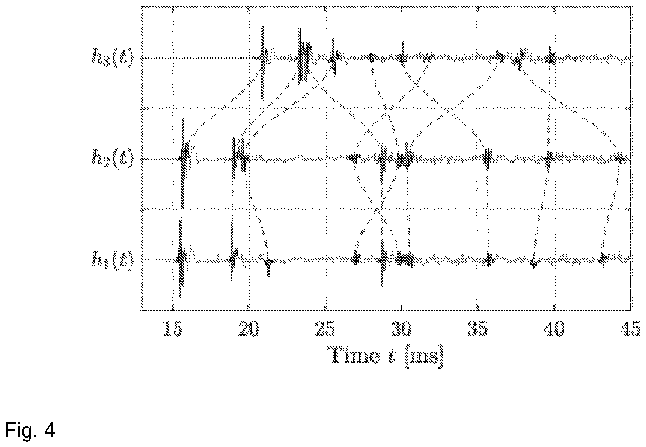

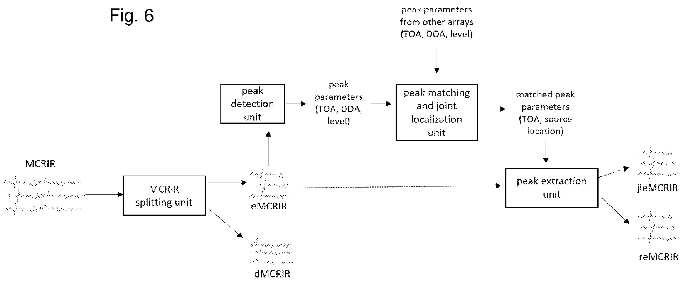

Referring on Fig. 4, in a next step, it is clarified which salient peaks in different multichannel impulse responses correspond to the same sound event, since the temporal order of incidence can vary with the location of the measurement position. This ambiguity is resolved by means of a peak matching unit (PMU) shown in Fig. 6, where salient peaks in the multichannel impulse responses corresponding to the same sound event are identified.

The peak matching can be performed in various ways and is achieved in this embodiment by an iterative approach that starts by finding consistent matching peaks of the largest unmatched peak, and by removing the involved peaks from the signals. This scheme is repeated until no more peaks are left or no peaks can be consistently associated with a sound event position.

Having identified a number of matching salient peaks corresponding to the same sound events, the location of the sound events may be accurately estimated by utilizing the above mentioned time-of-arrivals (TOAs) and direction-of-arrival (DOA) of the respective salient peaks in the selected subset of multichannel impulse responses. To this end one of the above-mentioned known localization methods for estimating the location of the sound source can be used.

In a next step, the multichannel impulse response segments corresponding to matching salient peaks are extrapolated to the desired extrapolation position by applying a gain, a directional mapping, e.g. a rotation, and a time shift.

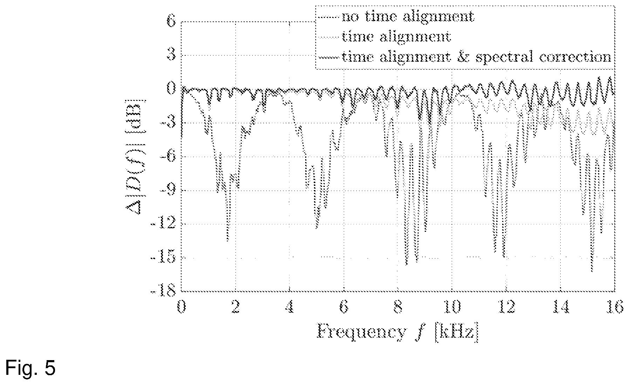

Furthermore, with respect to Fig. 5, to increase the sonic quality of the method, the temporal shifts may be adjusted such as to maximize the cross-correlations with the corresponding matched salient peaks which results in minimal spectral artifacts when the extrapolated multichannel impulse response segments are interpolated in a subsequent stage.

An optional step applies to estimate the position of the sound source if it is not readily available. The first salient peak in each multichannel impulse response is assumed to correspond to the direct sound. The location of the sound source may then be estimated by utilizing the time-difference-of-arrivals (TDOAs) given by the pairwise differences between the direct sound (rTOAs) of all available multichannel impulse responses, and their respective direction-of-arrivals (DOAs).

In the following, with reference on Fig. 6, method steps are described to extract at least two constitutive multichannel impulse responses from at least two input multichannel impulse responses corresponding to at least two microphone arrays.

In a first step, the multichannel impulse responses are split into its early parts and its late parts by means of an appropriate window function, whereas the splitting time may be fixed or automatically determined (e.g. dependent on the reverberation time or based on the estimated instantaneous diffusity) resulting in one early multichannel impulse response (eMCRIR) and one late multichannel impulse response (dMCRIR) for each input multichannel impulse responses. Optionally, diffuse components of the early multichannel impulse response may also be extracted and added to the late multichannel impulse response.

In a next step, salient peaks in the early multichannel impulse responses are identified. For example, if a multichannel impulse responses is provided as - or can be transformed into - an ambisonic format with an expansion order of at least one, the length of the acoustic intensity vector, or a temporally smoothed version thereof, might be compared to a predefined or adaptive threshold to identify salient peaks in the early multichannel impulse responses.

In a next step, the direct sound segments are extracted from the multichannel impulse responses by means of an appropriate window function yielding the direct sound early multichannel impulse responses (seMCRIRs), whereas the first salient peak in each early multichannel impulse responses is assumed to correspond to the direct sound propagation.

In a next step, salient peaks corresponding to jointly localizable sound events are identified in the peak matching unit (PMU) depicted in Fig. 6. By applying an appropriate window function, the corresponding multichannel impulse response segments are extracted from the early multichannel impulse responses, thus splitting the early multichannel impulse responses into jointly localizable early multichannel impulse responses (jleMCRIRs) and the residual early multichannel impulse responses (reMCRIRs).

In the following, further steps of an elaborated embodiment of the invention are described to generate a virtual multichannel impulse response from extracted parts of the extrapolated multichannel impulse responses.

In a first step, the direct sound early multichannel impulse responses (seMCRIRs), the jointly localizable early multichannel impulse responses (jleMCRIRs), and residual early multichannel impulse responses (reMCRIRs) are extrapolated as described in the previous steps.

In a next step, the late multichannel impulse response may be extrapolated by means of interpolating a parametric description of the late multichannel impulse responses. Alternatively, the late multichannel impulse response of each microphone array may be spatially enhanced or left unchanged in this step.

In a next step, the extrapolated parts of each multichannel impulse response may be summed, yielding the extrapolated multichannel impulse responses.

In a next step, the interpolated late multichannel impulse responses may be generated by linearly interpolating the extrapolated multichannel impulse responses of a selected set of arrays in the vicinity of the extrapolation position.

In an optional further step, a corrective gain factor may be applied to keep the overall signal energy constant.

The above explanations of the embodiments describe the present invention exclusively in the context of examples. As a matter of course, individual features of the embodiments can be freely combined with each other, provided that this makes technical sense, and that this is covered by the appended claims.

## Claims

1. A method for position-dependent extrapolation of multichannel room impulse responses, comprising the steps of:
providing at least one input multichannel room impulse response resulting from sound emitted by a sound source in a room, wherein the multichannel room impulse response comprises salient peaks, which correspond to sound events and which respectively represent a direct or a reflective propagation throughout the room;
splitting multichannel signals of the at least one input multichannel room impulse response into temporal segments, in which the salient peaks are enclosed;
identifying the salient peaks in the at least one multichannel room impulse response; determining spatial positions corresponding to the sound events based on known spatial parameters, and/or by means of a localization method for deriving spatial information contained in the at least one multichannel room impulse response;
assigning the determined sound event positions to the corresponding temporal segments of the at least one input multichannel room impulse response; and
generating an extrapolated multichannel room impulse response for a desired extrapolation position representing an arbitrary spatial location in the room, comprising the steps of:
applying a gain,
applying a directional mapping, and
applying a temporal shift,
to each of the temporal segments of the at least one input multichannel room impulse response, respectively, for obtaining the extrapolated multichannel room impulse response for the desired extrapolation position.

2. The method according to claim 1, comprising the steps of:
providing a plurality of input multichannel room impulse responses resulting from the sound source, each of which corresponds to a different one of a plurality of predetermined spatially distributed measurement positions; and
determining the position corresponding to any of the sound events based on the known spatial parameter of the sound source, and/or by means of the localization method for deriving spatial information contained in one or more of the plurality of input multichannel room impulse responses.

3. The method according to claim 1, wherein
the step of providing at least one input multichannel room impulse response further comprises:
providing at least one microphone array for capturing a set of impulse responses due to the sound source in the room;
arranging the at least one microphone array in a spatially predetermined measurement position in the room; and
capturing at least one multichannel room impulse response due to the sound source in the room.

4. The method according to claim 2, wherein
the step of providing a plurality of multichannel room impulse responses further comprises:
providing a plurality of microphone arrays for capturing a distributed set of impulse responses due to the sound source in the room;
arranging the plurality of microphone arrays in a plurality of predetermined spatially distributed measurement positions in the room; and
capturing a plurality of multichannel room impulse responses due to the sound source in the room.

5. The method according to one of claims 2 or 4, further comprising the step of:
generating at least two of the extrapolated multichannel room impulse responses;
generating an interpolated multichannel room impulse response for the desired extrapolation position; comprising the steps of:
choosing a subset of the at least two of the extrapolated multichannel room impulse responses based on the relative positions of the respective measurement positions with respect to the desired extrapolation position, applying a gain to weight each of the extrapolated multichannel room impulse responses of the chosen subset,
summing the gain weighted extrapolated multichannel room impulse responses for obtaining the interpolated multichannel room impulse response for the desired extrapolation position,
wherein preferably in the step of interpolating, the subset of extrapolated multichannel room impulse responses is chosen so as to define a simplex of respective measurement positions enclosing the desired extrapolation position, and/or
wherein preferably in the step of interpolating, the subset of extrapolated multichannel room impulse responses is defined by a number of respective measurement positions being closest to the desired extrapolation position.

6. The method according to one of the preceding claims, wherein
in the step of splitting signals, the temporal segments overlap and have unequal size; and/or
in the step of splitting signals, the duration of each temporal segment is in the range of one or more milliseconds.

7. The method according to one of the preceding claims, wherein
in the step of splitting signals, each temporal segment contains not more than one salient peak, wherein preferably the duration of each temporal segment depends on a duration of the one salient peak.

8. The method according to claim 7, wherein
in the step of splitting signals, a duration of each temporal segment contains a temporal margin prior and after the one salient peak, or at least a temporal margin prior to a next salient peak of a next temporal segment, wherein preferably the duration of each temporal margin is in the range of one or more tens of microseconds.

9. The method according to claim 7 or claim 8, wherein
in the step of splitting signals, the temporal segment containing the one salient peak is decomposed into a temporal segment that only contains the directional signal component of the salient peak and a residual temporal segment, whereas the residual temporal signal is assigned to a late multichannel room impulse response; and/or
in the step of splitting signals, temporal regions of the input multichannel room impulse response that are diffuse or do not contain any salient peak are assigned to a late multichannel room impulse response.

10. The method according to one of the preceding claims, wherein
in the step of determining a sound event position, the localization method utilizes one of an estimated direction-of-arrival (DOA), the relative time-of-arrival (rTOA) and/or the direct-sound absolute time offset (ATO) that relates to the first salient peak corresponding to the direct sound event arriving without reflections within the room and the spatial arrangement of the at least one sound source; and/or
in the step of determining a sound event position, the sound event position can occupy an auxiliary spatial position lying within or beyond a spatial volume of the room.

11. The method according to one of the preceding claims, wherein
in the step of extrapolating, the gain applied to each temporal segment accounts for a relation of the distance between the measurement position and the sound event position and the distance between the extrapolation position and the sound event position;
in the step of extrapolating, the gain is limited to avoid deteriorating high gain levels for an extrapolation position approaching close to the sound event position;
in the step of extrapolating, the directional mapping applied to each temporal segment accounts for a rotated perspective of the sound event at the extrapolation position;
in the step of extrapolating, the temporal shift applied to each temporal segment accounts for the difference of the distance between the measurement position and the sound event position and the distance between the extrapolation position and the sound event position; and/or
in the step of extrapolating, the temporal shifts are adjusted such as to maximize the cross-correlations between corresponding temporal segments of the input multichannel room impulse response.

12. An apparatus for position-dependent extrapolation or extrapolation and interpolation of multichannel room impulse responses, comprising:
storage means for storing at least one provided input multichannel room impulse response resulting from a sound emitted by a sound source in a room, and
signal processing means configured to conduct each of the steps of the methods for position-dependent extrapolation or extrapolation and interpolation of multichannel room impulse responses according to one of claims 1 to 11.

13. A system for position-dependent extrapolation or extrapolation and interpolation of multichannel room impulse responses including the apparatus according to claim 12, further comprising:
at least one microphone array configured to capture, with respect to a spatially predetermined measurement position in a room, a multichannel room impulse response due to the sound source in the room.

14. The system according to claim 13,
wherein the system comprises a plurality of the microphone arrays arranged in a plurality of predetermined spatially distributed measurement positions in the room, respectively; and/or
wherein each microphone array comprises three sound capturing devices for a resulting planar capturing setup; and/or
wherein each microphone array comprises four sound capturing devices for a resulting three-dimensional capturing setup; and/or;
wherein each microphone array is configured to support a signal transformation into corresponding spherical harmonic coefficients.

15. A computer program comprising instructions which, when executed by a computer, cause the computer to conduct each of the steps of the method for position-dependent extrapolation or extrapolation and interpolation of multichannel room impulse responses according to one of claims 1 to 11.

## Patentansprüche

1. Verfahren zur positionsabhängigen Extrapolation von Mehrkanal-Raumimpulsantworten, aufweisend die folgenden Schritte:
Bereitstellen mindestens einer Eingangs-Mehrkanal-Raumimpulsantwort, die aus dem emittierten Schall einer Schallquelle in einem Raum resultiert, wobei die Raumimpulsantwort markante Peaks (salient peaks) umfasst, die Schallereignissen entsprechen und jeweils eine direkte oder eine reflektierte Schallausbreitung durch den Raum darstellen;
Aufteilen der Mehrkanalsignale, der mindestens einen Eingangs-Mehrkanal-Raumimpulsantwort, in temporale Segmente, in denen die markanten Peaks eingeschlossen sind;
Identifizieren der markanten Peaks in der mindestens einen Mehrkanal-Raumimpulsantwort;
Bestimmen von räumlichen Positionen, die den Schallereignissen entsprechen, basierend auf bekannten räumlichen Parametern und/oder mittels eines Lokalisierungsverfahrens zur Ableitung räumlicher Informationen, die in der mindestens einen Mehrkanal-Raumimpulsantwort enthalten sind;
Zuordnen der festgelegten oder ermittelten räumlichen Schallereignispositionen zu den entsprechenden temporalen Segmenten der mindestens einen Eingangs-Mehrkanl-Raumimpulsantwort; und
Erzeugen einer extrapolierten Mehrkanal-Raumimpulsantwort für eine gewünschte Extrapolationsposition, die einen beliebigen räumlichen Ort im Raum repräsentiert, umfassend die Schritte:
Anwenden eines Verstärkungsfaktors (gain),
Anwenden einer Richtungsabbildung (directional mapping), und
Anwenden einer zeitlichen Verschiebung (temporal shift),
auf jedes der temporalen Segmente der mindestens einen Eingangs-Multichannel-Raumimpulsantwort, um die extrapolierte Mehrkanal-Raumimpulsantwort für die gewünschte Extrapolationsposition zu erhalten.

2. Verfahren nach Anspruch 1, aufweisend die folgenden Schritte:
Bereitstellen einer Vielzahl von Eingangs-Raumimpulsantworten, die von der Schallquelle herrühren, wobei jede davon einer anderen aus einer Vielzahl von vorbestimmten räumlich verteilten Messpositionen entspricht; und
Bestimmen der Position, die einem der Schallereignisse entspricht, basierend auf den bekannten räumlichen Parametern der Schallquelle und/oder mittels eines Lokalisierungsverfahrens zum Ableiten räumlicher Informationen, die in einer oder mehreren aus der Vielzahl von den Eingangs-Mehrkanal-Raumimpulsantworten enthalten sind.

3. Verfahren nach Anspruch 1, wobei der Schritt des Bereitstellens von mindestens einer Eingangs-Mehrkanal-Raumimpulsantwort ferner aufweist:
Bereitstellen mindestens eines Mikrofon-Arrays zum Erfassen von einem Set an Impulsantworten aufgrund der Schallquelle in dem Raum;
Anordnen des mindestens einen Mikrofon-Arrays an einer räumlich vorbestimmten Messposition in dem Raum; und
Erfassen mindestens einer Mehrkanal-Raumimpulsantwort in Bezug auf die Schallquelle in dem Raum.

4. Verfahren nach Anspruch 2, wobei
der Schritt des Bereitstellens einer Vielzahl von Mehrkanal-Raumimpulsantworten ferner umfasst:
Bereitstellen einer Vielzahl von Mikrofon-Arrays zum Erfassen eines Sets bestehend aus einer Vielzahl von Impulsantworten aufgrund der Schallquelle in dem Raum;
Anordnen der Vielzahl von Mikrofon-Arrays an einer Vielzahl von vordefinierten räumlich verteilten Messpositionen in dem Raum; und
Erfassen einer Vielzahl von Mehrkanal-Raumimpulsantworten aufgrund der Schallquelle in dem Raum.

5. Verfahren nach einem der Ansprüche 2 oder 4, das ferner folgende Schritte umfasst:
Erzeugen von mindestens zwei der extrapolierten Mehrkanal-Raumimpulsantworten;
Erzeugen einer interpolierten Mehrkanal-Raumimpulsantwort für die gewünschte Extrapolationsposition aufweisend die folgenden Schritte:
Auswählen eines Subsets von mindestens zwei der extrapolierten Mehrkanal-Raumimpulsantworten, basierend auf den relativen Positionen der jeweiligen Messpositionen in Bezug auf die gewünschte Extrapolationsposition.
Anwenden eines Verstärkungsfaktors (gain) zum Gewichten jeder der extrapolierten Mehrkanal-Raumimpulsantworten des ausgewählten Subsets;
Summieren der verstärkungsgewichteten extrapolierten Mehrkanal-Raumimpulsantworten zum Erhalt der interpolierten Mehrkanal-Raumimpulsantwort für die gewünschte Extrapolationsposition,
wobei vorzugsweise im Schritt des Interpolierens das Subset der extrapolierten Mehrkanal-Raumimpulsantworten so gewählt wird, dass es einen Simplex der jeweiligen Messpositionen definiert, der die gewünschte Extrapolationsposition umschließt,
und/oder wobei vorzugsweise im Schritt des Interpolierens das Subset der extrapolierten Mehrkanal-Raumimpulsantworten durch eine Anzahl von zugehörigen Messpositionen definiert wird, die der gewünschten Extrapolationsposition am nächsten liegen.

6. Verfahren nach einem der vorangehenden Ansprüche, wobei
im Schritt des Aufteilens von Signalen, die temporalen Segmente überlappen und ungleiche Größe aufweisen; und/oder
im Schritt des Aufteilens von Signalen, die Dauer jedes temporalen Segments im Bereich von einer oder mehreren Millisekunden liegt.

7. Verfahren nach einem der vorangehenden Ansprüche, wobei
im Schritt des Aufteilens von Signalen jedes temporale Segment nicht mehr als einen markanten Peak enthält, und wobei vorzugsweise die Dauer jedes temporalen Segments von einer Dauer des einen markanten Peaks abhängt.

8. Verfahren nach Anspruch 7, wobei
im Schritt des Aufteilens von Signalen eine Dauer jedes temporalen Segments einen zeitlichen Randbereich (temporal margin) vor und nach dem einen markanten Peak, oder zumindest einen zeitlichen Randbereich vor einem nächsten markanten Peak eines nächsten temporalen Segments enthält, wobei vorzugsweise die Dauer jedes zeitlichen Randbereichs zwischen ein oder mehreren zehn Mikrosekunden liegt.

9. Verfahren nach Anspruch 7 oder Anspruch 8, wobei
im Schritt des Aufteilens von Signalen das temporale Segment, das den einen markanten Peak enthält, in ein temporales Segment, das nur die direktionale Signalkomponente des markanten Peaks enthält, und eine residuale Signalkomponente zerlegt wird, wobei die residuale Signalkomponente zu einer späten Mehrkanal-Raumimpulsantwort zugewiesen wird; und/oder
im Schritt des Aufteilens von Signalen temporale Segmente der Eingangs-Mehrkanal-Raumimpulsantwort, die als diffus bestimmt werden oder keine markanten Peaks enthalten, einer späten Mehrkanal-Raumimpulsantwort zugewiesen werden.

10. Verfahren nach einem der vorangehenden Ansprüche, wobei
im Schritt der Bestimmung der Position eines Schallereignisses das Lokalisierungsverfahren eine der folgenden Größen verwendet: eine geschätzte Einfallsrichtung (DOA), die relative Laufzeitdifferenz (rTOA) und/oder den absoluten Zeitversatz des Direktschalls (ATO), welcher sich auf das erste markante Maximum bezieht, das dem Direktschallereignis entspricht, das ohne Reflexionen im Raum eintrifft, sowie auf die räumliche Anordnung der mindestens einen Schallquelle; und/oder
im Schritt des Bestimmens einer Schallereignisposition, die Schallereignisposition eine räumliche Hilfs-Position einnehmen kann, die innerhalb oder außerhalb eines räumlichen Volumens des Raums liegt.

11. Verfahren nach einem der vorangehenden Ansprüche, wobei
im Schritt des Extrapolierens, der auf jedes temporale Segment angewendete Verstärkungsfaktor das Verhältnis des Abstands zwischen der Messposition und der Schallereignisposition und des Abstands zwischen der Extrapolationsposition und der Schallereignisposition berücksichtigt;
im Schritt des Extrapolierens, die Verstärkung begrenzt ist, um eine Verschlechterung durch hohe Verstärkungspegel zu vermeiden, wenn sich eine Extrapolationsposition der Schallereignisposition nähert;
im Schritt des Extrapolierens, die auf jedes temporale Segment angewendete direktionale Abbildung eine rotierte Perspektive des Schallereignisses an der Extrapolationsposition berücksichtigt;
im Schritt des Extrapolierens, die auf jedes temporale Segment angewendete zeitliche Verschiebung die Differenz des Abstands zwischen der Messposition und der Schallereignisposition und des Abstands zwischen der Extrapolationsposition und der Schallereignisposition berücksichtigt; und/oder
im Schritt des Extrapolierens, die zeitlichen Verschiebungen so angepasst werden, dass die Kreuzkorrelationen zwischen entsprechenden temporalen Segmenten der Eingangs-Mehrkanal-Raumimpulsantwort maximiert werden.

12. Vorrichtung zur positionsabhängigen Extrapolation oder Extrapolation und Interpolation von Mehrkanal-Raumimpulsantworten, umfassend:
Speichermittel zum Speichern mindestens einer bereitgestellten Eingangs-Mehrkanal-Raumimpulsantwort, die aus einem von einer Schallquelle in einem Raum abgegebenen Schall resultiert, und
Signalverarbeitungsmittel, die konfiguriert sind, um jeden der Schritte der Verfahren zur positionsabhängigen Extrapolation oder Extrapolation und Interpolation von Mehrkanal-Raumimpulsantworten gemäß einem der Ansprüche 1 bis 11 durchzuführen.

13. System zur positionsabhängigen Extrapolation oder Extrapolation und Interpolation von Mehrkanal-Raumimpulsantworten, umfassend die Vorrichtung nach Anspruch 12, ferner umfassend:
Mindestens ein Mikrofon-Array, das konfiguriert ist, um in Bezug auf eine räumlich vorbestimmte Messposition in einem Raum eine Mehrkanal-Raumimpulsantwort aufgrund der Schallquelle in dem Raum zu erfassen.

14. System nach Anspruch 13,
wobei das System eine Vielzahl von Mikrofon-Arrays umfasst, die jeweils an einer Vielzahl von vorbestimmten räumlich verteilten Messpositionen in dem Raum angeordnet sind; und/oder
wobei jedes Mikrofon-Array drei Schallerfassungsvorrichtungen für einen resultierenden planaren Erfassungsaufbau umfasst; und/oder;
wobei jedes Mikrofon-Array vier Schallerfassungsvorrichtungen für einen resultierenden dreidimensionalen Erfassungsaufbau umfasst;
wobei jedes Mikrofon-Array konfiguriert ist, um eine Signaltransformation in entsprechende Kugelflächen-Harmonische-Koeffizienten (sphercial harmonics) zu unterstützen.

15. Ein Computerprogramm, das Anweisungen aufweist, die, wenn sie von einem Computer ausgeführt werden, den Computer veranlassen, die Schritte des Verfahrens zur positionsabhängigen Extrapolation oder Extrapolation und Interpolation von Mehrkanal-Raumimpulsantworten gemäß einem der Ansprüche 1 bis 11 durchzuführen.

## Revendications

1. Procédé d'extrapolation dépendant de la position de réponses impulsionnelles multicanales, comprenant les étapes suivantes : fournir au moins une réponse impulsionnelle multicanaux d'entrée, qui résulte d'un son émis par une source sonore dans la pièce, la réponse impulsionnelle spatiale comprenant des « pics saillants » (*salient* peaks) qui correspondent à des événements sonores et représentent chacun une propagation sonore directe ou réfléchie à travers l'espace considéré ; diviser les signaux de la au moins une réponse impulsionnelle de salle d'entrée en segments temporels, dans lesquels les pics saillants sont inclus ; identifier les pics saillants dans la au moins une réponse impulsionnelle de salle à l'entrée ; déterminer les positions spatiales qui correspondent aux événements sonores, en se basant sur des paramètres spatiaux connus et/ou au moyen d'un procédé de localisation pour dériver les informations spatiales contenues dans la au moins une réponse impulsionnelle de salle à l'entrée ; attribuer les positions d'événements sonores spatiales déterminées ou calculées aux segments temporels correspondants de la au moins une réponse impulsionnelle de salle d'entrée ; et générer une réponse impulsionnelle de salle multicanale extrapolée pour une position d'extrapolation souhaitée, qui représente un emplacement spatial arbitraire dans la pièce, comprenant les étapes : d'application d'un facteur d'amplification (gain), d'application d'une cartographie directionnelle (*directional mapping*), et d'application d'un décalage temporel (temporal shift), à chacun des segments temporels de la au moins une réponse impulsionnelle de salle d'entrée, afin d'obtenir la réponse impulsionnelle de salle multicanale extrapolée pour la position d'extrapolation souhaitée.

2. Procédé selon la revendication 1, comprenant les étapes suivantes : fournir une pluralité de réponses impulsionnelles de salle d'entrée, qui proviennent de la source sonore, chacune d'elles correspondant à l'une d'une pluralité de positions de mesure prédéterminées et distribuées spatialement ; et déterminer la position qui correspond à l'un des événements sonores, en se basant sur les paramètres spatiaux connus de la source sonore et/ou au moyen d'un procédé de localisation pour dériver les informations spatiales qui sont contenues dans une ou plusieurs de la pluralité de réponses impulsionnelles de salle multicanale.

3. Procédé selon la revendication 1, **caractérisé en ce que** l'étape consistant à fournir au moins une réponse impulsionnelle de salle d'entrée comprend en outre : la fourniture d'au moins un réseau de microphones pour capturer un ensemble de réponses impulsionnelles en fonction de la source sonore dans la salle ; la disposition d'au moins un réseau de microphones à une position de mesure spatiale prédéterminée dans la salle ; et la capture d'au moins une réponse impulsionnelle de salle relative à la source sonore dans la salle.

4. Procédé selon la revendication 2, **caractérisé en ce que** l'étape consistant à fournir une pluralité de réponses impulsionnelles de salle multicanale comprend en outre : la fourniture d'une pluralité de réseaux de microphones pour capturer un ensemble composé d'une pluralité de réponses impulsionnelles en fonction de la source sonore dans la salle ; la disposition de la pluralité de réseaux de microphones à une pluralité de positions de mesure prédéterminées et distribuées spatialement dans la salle ; et la capture d'une pluralité de réponses impulsionnelles de salle multicanaux en fonction de la source sonore dans la salle.

5. Procédé selon l'une des revendications 2 ou 4, qui comprend en outre les étapes suivantes : générer au moins deux des réponses impulsionnelles de salle multicanales extrapolées ; générer une réponse impulsionnelle de salle multicanale interpolée pour la position d'extrapolation souhaitée comprenant les étapes : de choisir un sous-ensemble d'au moins deux des réponses impulsionnelles de salle multicanales extrapolées en se basant sur les positions relatives des positions de mesure respectives par rapport à la position d'extrapolation souhaitée. D'appliquer un facteur d'amplification (gain) pour pondérer chacune des réponses impulsionnelles de salle multicanales extrapolées du sous-ensemble choisi ; de faire la somme des réponses impulsionnelles de salle multicanales extrapolées pondérées par le gain pour obtenir la réponse impulsionnelle de salle multicanaux interpolée pour la position d'extrapolation souhaitée ; dans lequel, de préférence, à l'étape d'interpolation, le sous-ensemble des réponses impulsionnelles de salle multicanales extrapolées est choisi de manière à définir un simplexe des positions de mesure respectives qui entoure la position d'extrapolation, et/ou dans lequel, de préférence, à l'étape d'interpolation, le sous-ensemble des réponses impulsionnelles de salle multicanales extrapolées est défini par un nombre de positions de mesure respectives qui sont les plus proches de la position d'extrapolation.

6. Procédé selon l'une des revendications précédentes, **caractérisé en ce que**, à l'étape de division des signaux, les segments temporels se chevauchent et ont une taille inégale et/ou à l'étape de division des signaux, la durée de chaque segment temporel est comprise dans la plage d'une ou plusieurs millisecondes.

7. Procédé selon l'une des revendications précédentes, **caractérisé en ce que**, à l'étape de division des signaux, chaque segment temporel ne contient pas plus d'un pic saillant, dans lequel, de préférence, la durée de chaque segment temporel dépend de la durée du pic saillant.

8. Procédé selon la revendication 7, **caractérisé en ce que**, à l'étape de division des signaux, la durée de chaque segment temporel contient une marge temporelle (temporal *margin*) avant et après le pic saillant ou au moins une marge temporelle avant un pic saillant suivant d'un segment temporel suivant, dans lequel, de préférence, la durée de chaque marge temporelle est comprise entre une ou plusieurs dizaines de microsecondes.

9. Procédé selon la revendication 7 ou 8, **caractérisé en ce que**, à l'étape de division des signaux, le segment temporel contenant le pic saillant est décomposé en un segment temporel qui ne contient que la composante de signal directionnelle du pic saillant et en une composante de signal résiduelle, dans lequel la composante de signal résiduelle est attribuée à une réponse impulsionnelle de salle multicanale tardive ; et/ou à l'étape de division des signaux, les segments temporels de la réponse impulsionnelle de salle multicanale d'entrée qui sont déterminés comme étant diffus ou ne contenant pas de pics saillants sont attribués à une réponse impulsionnelle de salle multicanale tardive.

10. Procédé selon l'une des revendications précédentes, **caractérisé en ce que**, à l'étape de détermination d'une position d'événement sonore, le procédé de localisation utilise l'un des paramètres suivants : une direction d'arrivée (*Direction-of-Arrival, DOA*) estimée, le temps d'arrivée relatif (relative *Time-of-Arrival, rTOA*) et/ou le décalage temporel absolu du son direct (*direct-sound Absolute Time* Offset, ATO), qui se rapporte au premier pic saillant correspondant à l'événement de son direct arrivant sans réflexion à l'intérieur de la salle, ainsi que la disposition spatiale de la au moins une source sonore ; et/ou à l'étape de détermination d'une position d'événement sonore, la position d'événement sonore peut occuper une position spatiale auxiliaire qui se trouve à l'intérieur ou au-delà d'un volume spatial de la salle.

11. Procédé selon l'une des revendications précédentes, **caractérisé en ce que** l'étape d'extrapolation, le gain appliqué à chaque segment temporel prend en compte le rapport de la distance entre la position de mesure et la position d'événement sonore et de la distance entre la position d'extrapolation et la position d'événement sonore ; à l'étape d'extrapolation, le gain est limité afin d'éviter la détérioration due à des niveaux de gain élevés lorsqu'une position d'extrapolation s'approche de la position d'événement sonore ; à l'étape d'extrapolation, la cartographie directionnelle appliquée à chaque segment temporel prend en compte une perspective rotative de l'événement sonore à la position d'extrapolation ; à l'étape d'extrapolation, le décalage temporel appliqué à chaque segment temporel prend en compte la différence de la distance entre la position de mesure et la position d'événement sonore et de la distance entre la position d'extrapolation et la position d'événement sonore ; et/ou à l'étape d'extrapolation, les décalages temporels sont ajustés de manière à maximiser les corrélations croisées entre les segments temporels de la réponse impulsionnelle multicanale d'entrée correspondants.

12. Appareil pour l'extrapolation ou l'extrapolation et l'interpolation dépendantes de la position de réponses impulsionnelles de salle multicanales, comprenant : des moyens de stockage pour stocker au moins une réponse impulsionnelle de salle d'entrée fournie, qui résulte d'un son émis par une source sonore dans une salle, et des moyens de traitement de signal configurés pour conduire chacune des étapes des procédés d'extrapolation - ou d'extrapolation et d'interpolation - dépendantes de la position de réponses impulsionnelles de salle multicanales selon l'une des revendications 1 à 11.

13. Système pour l'extrapolation - ou l'extrapolation et l'interpolation - dépendantes de la position de réponses impulsionnelles de salle multicanales, comprenant l'appareil selon la revendication 12, comprenant en outre : au moins un réseau de microphones, qui est configuré pour capturer, par rapport à une position de mesure spatiale prédéterminée dans une salle, une réponse impulsionnelle de salle multicanale en fonction de la source sonore dans la salle.

14. Système selon la revendication 13, **caractérisé en ce que** le système comprend une pluralité de réseaux de microphones, qui sont disposés respectivement à une pluralité de positions de mesure prédéterminées et distribuées spatialement dans l'espace considéré ; et/ou dans lequel chaque réseau de microphones comprend trois dispositifs de capture sonore pour une configuration de capture planaire résultante ; et/ou dans lequel chaque réseau de microphones comprend quatre dispositifs de capture sonore pour une configuration de capture tridimensionnelle résultante ; dans lequel chaque réseau de microphones est configuré pour prendre en charge une transformation de signal en coefficients harmoniques sphériques (*spherical harmonics*) correspondants.

15. Programme informatique, comprenant des instructions qui, lorsqu'elles sont exécutées par un ordinateur, amènent l'ordinateur à conduire chacune des étapes du procédé d'extrapolation - ou d'extrapolation et d'interpolation - dépendantes de la position de réponses impulsionnelles multicanales selon l'une des revendications 1 à 11.
